# EUROPEAN PATENT APPLICATION

(11) **EP 1 645 529 A1**
(43) Date of publication of application: **12.04.2006**
(21) Application number: 05077337.3
(22) Date of filing: 11.10.2005
(51) Int. Cl.: B65G 47/57, B65G 47/71

(54) **Device for transferring goods**

(30) Priority: 11.10.2004 NL 1027215
(71) Applicant: Nedpack Patenten B.V., 3846 CE Harderwijk (NL)
(72) Inventor: Hanessen, Pieter Gerrit, 3843 JK Harderwijk (NL)
(74) Representative: Land, Addick Adrianus Gosling

(57) **Abstract**

The present invention provides a device (1) for transferring goods (56) from a first to a second conveyor of random nature, comprising:
- a substantially vertically extending frame (8) with a longitudinal axis;
- transport means (20) arranged on the frame (8) and driven by a motor (22); and
- at least one carrier (10) connected to the transport means (20), wherein the carrier (10) is connected to the transport means (20) for moving thereof along the frame,
wherein the frame (8) is rotatable around the longitudinal axis thereof.

## Description

The present invention relates to a device for transferring goods from one conveyor of random nature to another.

Such devices are applied in transport systems wherein vertical and/or horizontal distances between different conveyors have to be bridged, or simply in order to save space in that conveyors can be arranged at different heights.

The Netherlands patent no. 1010466 shows a vertical lift for lifting products. The known device comprises a frame and two carriers which are mounted rotatably via a shaft on two chain wheel-driven chains. Two side rollers are used to come into contact with guide tracks for the purpose of holding the carrier horizontal irrespective of any change in vertical displacement and lateral movement. A spring-loaded element is moreover arranged to hold the side rollers in contact in the transition from horizontal movement of the carrier to vertical displacement and vice versa. The spring-loaded element is mounted for rotation about one of its ends on the frame. If the goods for transporting are not placed in the middle of the carrier, there is the danger of the carrier tilting and of one of the side rollers losing contact with the track or the spring-loaded element. Although the lift is a continuous conveyor, the construction is relatively complicated and therefore costly. In addition, transport is limited to the vertical direction.

The present invention has for its object to provide a device wherein the goods can be supplied and discharged from different directions.

The invention provides for this purpose a device for transferring goods from a first to a second conveyor of random nature, comprising:
- a substantially vertically extending frame with a longitudinal axis;
- transport means arranged on the frame and driven by a motor; and
- at least one carrier connected to the transport means, wherein the carrier is connected to the transport means for moving thereof along the frame,
wherein the frame is rotatable around the longitudinal axis thereof.

Because the frame is rotatable, the carrier mounted on the frame can rotate in the horizontal plane so that goods can be supplied and discharged from all directions. The relatively simple construction allows a cost reduction, so that this device is more readily suitable than the known device for applications wherein cost is a critical factor. The capacity is doubled by mounting a second carrier to the device, and a further cost reduction thus obtained.

The device preferably comprises a base provided with a motor coupled to the frame for the purpose of rotating the frame around the longitudinal axis. The device can hereby be deployed in more flexible manner since the base can in turn be displaceable.

In a further preferred embodiment, the first or the second conveyor is a rope conveyor and the carrier comprises fingers arranged roughly parallel to and at a distance from each other for passage thereof between the ropes of the rope conveyor. Product transitions are hereby prevented, i.e. the carrier supports the product arranged on the carrier at all times, thereby preventing problems with clamps or suction cups. This is also advantageous in the case of unstable products or products with variable dimensions.

In yet another preferred embodiment, the second conveyor is a roller conveyor and the carrier comprises fingers arranged roughly parallel to and at a distance from each other for passage thereof between the rollers of the roller conveyor. Product transitions are hereby likewise prevented, with the associated advantages.

The frame is preferably rotatable through 360°. This makes it possible to operate more than one line. A plurality of supply lines can for instance also be combined with a single discharge line, or vice versa.

In a preferred embodiment, the transport means comprise an endless rope or chain. A semi-continuous lifting action is thus possible. This construction is also sufficiently robust.

If the conveyor is formed by a roller conveyor or rope conveyor, the carrier is formed by fingers arranged substantially parallel to and at a distance from each other. The fingers of the carrier intersect the infeed and outfeed paths, whereby during an ascending movement the goods are lifted off the feed conveyor and during a descending movement they are taken off the carrier and placed on the outfeed conveyor. This has the advantage that there are no transport transitions and that the device can be constructed relatively compactly in combination with the conveyors.

Further advantages and features will be elucidated with reference to the annexed drawings, in which:
fig. 1 shows a perspective view of a device according to the present invention in a first preferred embodiment;
fig. 2 shows a detail in perspective of the rope conveyor and the carrier with fingers of fig. 1;
fig. 3 shows a detail in perspective of a roller conveyor and the carrier with fingers of fig. 1;
fig. 4 is a perspective view of a second preferred embodiment of a device according to the present invention; and
fig. 5 is a cut-away perspective view of a third preferred embodiment of the present invention.

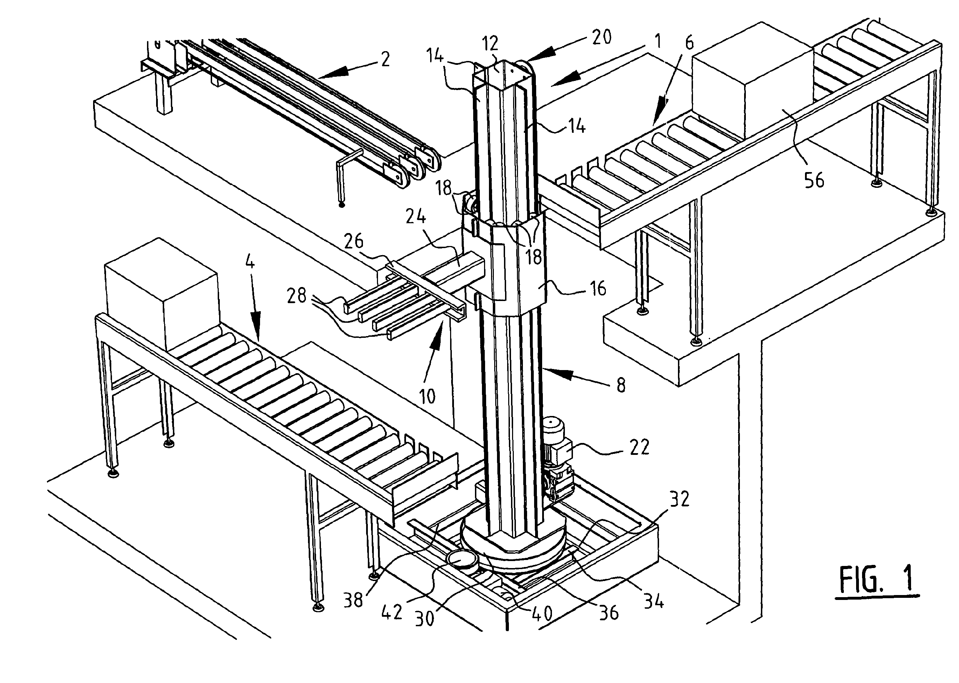

A device 1 for transferring goods from one conveyor of random nature to another (2, 4, 6) as shown in fig. 1 comprises a frame 8, on which a carrier 10 is arranged in vertically displaceable manner for vertically picking up products from the one conveyor and setting down the products on another conveyor.

In the shown preferred embodiment the frame 8 comprises a vertical profile beam 12 of roughly square cross-section. Protruding plate strips 14 are arranged in the middle of the sides of profile beam 12.

In a first preferred embodiment (fig. 1) the carrier comprises an octagonal carrier member 16 of folded plate material arranged around the profile beam. Guide wheels 18 are arranged on the inner side of carrier member 16, in each case at the top and bottom of the carrier member and on each side of plate strips 14. The carrier member therefore comprises four guide wheels per plate strip, a total of sixteen wheels.

On one side the carrier member is connected fixedly to endless transport means 20 arranged vertically along the profile beam over about the whole length thereof. The transport means are coupled to motor 22 so that carrier 10 can be moved up and downward along the frame.

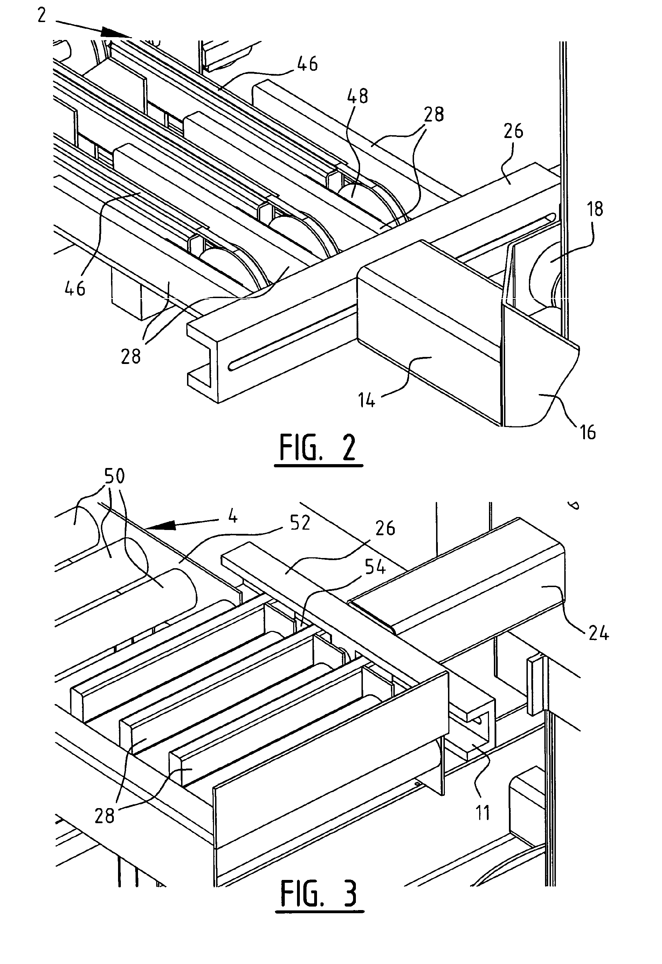

Arranged on carrier member 16 is a protruding arm 24 which is provided on the outer end with a cross beam 26 with elongate fingers 28. The fingers can pass between the ropes of rope conveyor 2 or between the rollers of roller conveyors 4, 6, as shown in detail in figures 2 and 3.

In order to enable supply and discharge of products from different directions the frame 8 is arranged on a base 30. In a first preferred embodiment the base is bearing-mounted and rotatable through 360°, so that by rotating the base the frame fixedly connected thereto likewise rotates. In another preferred embodiment the base is disposed fixedly and the frame is arranged rotatably and bearing-mounted therein.

In the preferred embodiment shown in fig. 1 the base 30 is arranged bearing-mounted on a support frame of steel beams 32, 34, 36 and 38. Arranged adjacently of the support frame is a motor 40 which drives a wheel 42 provided with a rubber covering. Wheel 42 presses against the round base 30 and thus transmits rotation forces. Other transmissions can of course be envisaged, such as a rope drive and the like.

Fig. 2 shows that the dimensions of fingers 28 of the carrier and the distance between ropes 46 of rope conveyor 2 are chosen such that the fingers can pass therebetween. Arranged at the outer end of the conveyor are reversing wheels for the ropes which likewise pass between the fingers.

Fig. 3 shows in similar manner that the distance between rollers 50 of roller conveyor 4 is chosen such that fingers 28 can pass therebetween. In side wall 52 of the roller conveyor are here also arranged interruptions 54 in which the fingers fit.

The operating principle of the device is as follows. Goods 56 are supplied for instance over roller conveyor 6. The frame is rotated 90° to the left relative to the position shown in fig. 1, whereafter carrier 10 is moved upward by transport means 20. Fingers 28 of carrier 10 intersect the feed path of roller conveyor 6, whereby the product in package 56 is lifted during the upward movement and is transported further on the carrier.

The product can now be carried as required to discharge conveyor 2 or 4. In the first case the frame is first rotated through 180°, whereafter the carrier is moved downward until fingers 28 intersect the ropes of rope conveyor 2 and the product remains behind thereon for further transport. In the second case the carrier is rotated back clockwise through 90°, whereafter the carrier is moved almost wholly downward until fingers 28 intersect rollers 50 and the product is left behind thereon. Other combinations of in and outfeed of products are possible, and the number of conveyors can vary from the shown three conveyors.

In a second preferred embodiment the device comprises two carriers 62, 72 which are arranged on either side of a vertical column 60. The carriers correspond roughly to the above described carrier and comprise fingers 64-70 and 74-80 respectively. Arranged in or against the column is a drive mechanism (not shown) which is driven by motor 22. Carriers 62 and 72 are here moved in opposite directions, i.e. when carrier 62 moves upward, carrier 72 moves downward. In accordance with the first preferred embodiment, column 60 is arranged on a rotatable base 30 to enable in and outfeed of products in different directions. The operation of the device is otherwise the same as the principle described with reference to figures 1-3.

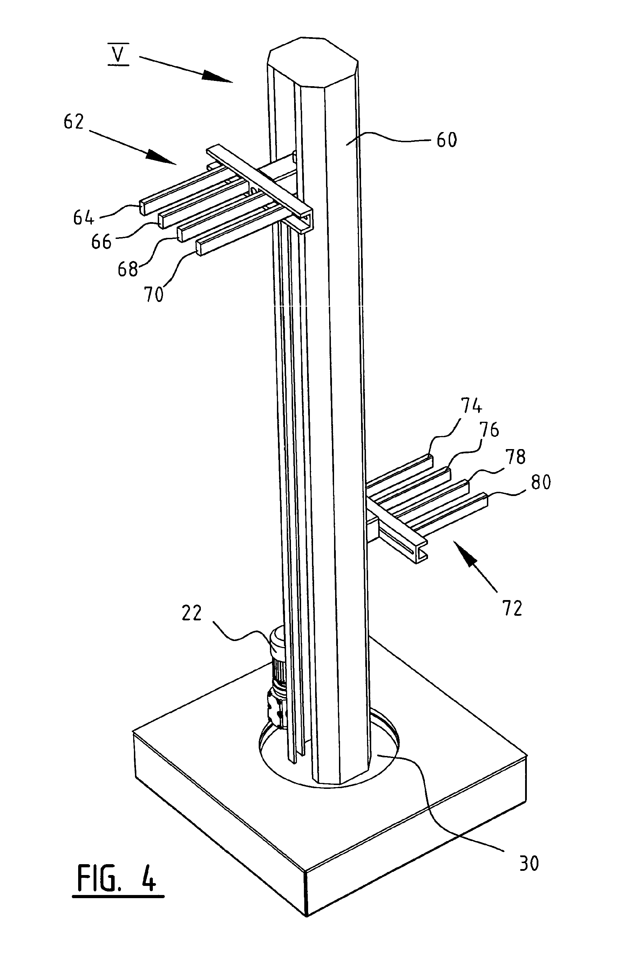

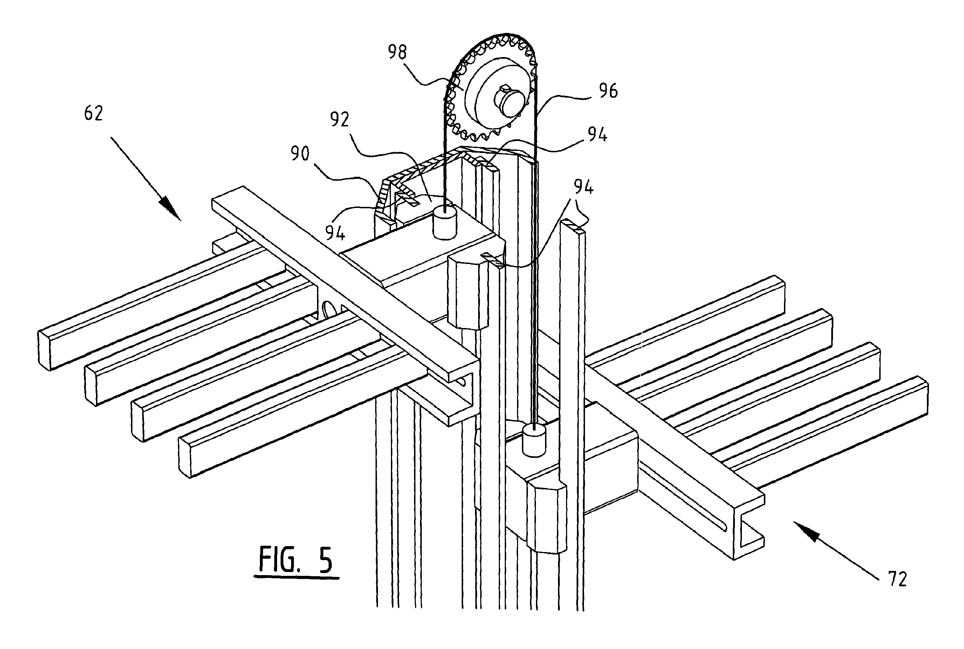

A third preferred embodiment relates to the carrier mechanism, a detail of which - designated V in fig. 4 - is shown in fig. 5. The wheels are omitted here and are replaced by a slide mechanism. Column 90 is provided for this purpose on the inside with slide strips 94 over which shoes 92, which are provided with a groove corresponding to strips 94, can move in sliding manner. The shoes are arranged on either side of the arms of carriers 62, 72. The arms are further connected to a chain, cable 96 or the like which is driven by motor 22 and which turns round at the top over reversing wheel 98.

A practical embodiment of the slide mechanism comprises slide shoes VS manufactured from one or more of the materials Aclathan®, Aclamid®, Aclasyn®. These are for instance supplied by the firm ACLA-Werke GmbH of Cologne (FRG). The stated materials are respectively a homogeneous polyurethane elastomer of high quality, a special polyamide for heavy loading, or the material Aclasyn® GR with special sliding characteristics.

The present vertical conveyor provides a simple construction for vertical displacement of products for subsequent discharge again in a direction at random. Owing to the relatively simple construction, for instance the single carrier and the absence of a reversing mechanism at top and bottom, the device is robust and relatively inexpensive in maintenance and purchase.

The present invention is not limited to the above described preferred embodiments thereof, in which many modifications are possible within the scope of the appended claims.

## Claims

1. Device (1) for transferring goods from a first to a second conveyor, comprising:
- a substantially vertically extending frame (8) with a longitudinal axis;
- transport means (20) arranged on the frame and driven by a motor (22); and
- at least one carrier (10) connected to the transport means, wherein the carrier is connected to the transport means for moving thereof along the frame,
wherein the frame is rotatable around the longitudinal axis thereof.

2. Device as claimed in claim 1, further comprising a base (30) provided with a motor coupled to the frame for the purpose of rotating the frame around the longitudinal axis.

3. Device as claimed in claim 1 or 2, wherein the first or the second conveyor is a rope conveyor (2) and wherein the carrier (10) comprises fingers (28) arranged roughly parallel to and at a distance from each other for passage thereof between the ropes of the rope conveyor.

4. Device as claimed in claim 1, 2 or 3, wherein the second conveyor is a roller conveyor and wherein the carrier (10) comprises fingers (28) arranged roughly parallel to and at a distance from each other for passage thereof between the rollers of the roller conveyor.

5. Device as claimed in claim 3 or 4, wherein the distance between the ropes (46) of the rope conveyor and/or between the rollers (50) of the roller conveyor is at least greater than the width of the fingers (28).

6. Device as claimed in any of the foregoing claims, wherein the frame (8) is rotatable through 360°.

7. Device as claimed in any of the foregoing claims, wherein the transport means comprise an endless rope or chain.

8. Method for transferring goods from a first to a second conveyor, comprising the steps of:
- rotating a substantially vertically extending frame (8) with a longitudinal axis until a carrier (10) arranged on the frame is situated under a first conveyor;
- moving the carrier upward along the frame by means of transport means (20) driven by a motor (22) until the carrier is situated higher than the first conveyor, wherein the carrier takes a product (56) off the conveyor;
- rotating the frame around the longitudinal axis until the carrier is situated above a second conveyor; and
- moving the carrier downward into a position lower than the second conveyor, wherein the product remains behind on the second conveyor.
